# EUROPÄISCHE PATENTSCHRIFT

(11) **EP 3 426 956 B1**
(45) Veröffentlichungstag und Bekanntmachung des Hinweises auf die Patenterteilung: **06.05.2020**
(21) Anmeldenummer: 16709781.5
(22) Anmeldetag: 11.03.2016
(51) Int. Cl.: F16K 31/04, H02M 1/10, H02M 5/458, F23K 5/00

(54) **VENTILANTRIEB**
VALVE TRAIN
COMMANDE DE SOUPAPE

(43) Veröffentlichungstag der Anmeldung: 16.01.2019
(73) Patentinhaber: Karl Dungs GmbH & Co.KG, 73660 Urbach (DE)
(72) Erfinder: OBERMÖLLER, Nils, 73614 Schorndorf (DE)
(74) Vertreter: Rüger Abel Patentanwälte PartGmbB
(86) Internationale Anmeldenummer: PCT/EP2016/055365
(87) Internationale Veröffentlichungsnummer: WO 2017/153002

(56) Entgegenhaltungen:
- JP-A- 2006 161 855
- US-A1- 2005 127 854
- SHI ZHANG ET AL: "The design of the intelligent electric actuator control system based on variable frequency", INDUSTRIAL ELECTRONICS AND APPLICATIONS (ICIEA), 2013 8TH IEEE CONFERENCE ON, IEEE, 19. Juni 2013 (2013-06-19), Seiten 337-341, XP032442075, DOI: 10.1109/ICIEA.2013.6566391 ISBN: 978-1-4673-6320-4
- EDWARD J HANKEY ET AL: "Improved input power conditioning for fractional horsepower shipboard valve actuators", ELECTRIC SHIP TECHNOLOGIES SYMPOSIUM, 2009. ESTS 2009. IEEE, IEEE, PISCATAWAY, NJ, USA, 20. April 2009 (2009-04-20), Seiten 484-490, XP031451898, ISBN: 978-1-4244-3438-1

## Beschreibung

Die Erfindung betrifft einen Ventilantrieb, der für Ventile allgemein, insbesondere aber für Gasventile mit Sicherheitsabsperrfunktion geeignet ist.

Prinzipiell sind Motorstellventile bekannt, auch solche, bei denen eine Schließfeder das Ventilverschlussglied bei stromlosem Motor in Schließstellung überführt.

Zum Beispiel offenbart die DE 10 2009 012 405 A1 einen Ventilantrieb, bei dem das Ventilverschlussglied über ein Getriebe von einem Elektromotor betätigt wird. Dieser ist als Schrittmotor ausgebildet und dazu geeignet, das Ventilverschlussglied gegen die Kraft einer Schließfeder von dem Ventilsitz weg zu bewegen und in einer bestimmten Position zu halten. Das Getriebe ist nicht selbsthemmend ausgebildet, so dass die Schließfeder das Ventil bei stromlosem Schrittmotor schließen kann.

Ein weiteres Beispiel von Ventilantrieb wird in JP 2006-161855 A beschrieben.

Im Sinne einer weiten Anwendung von gegebenen Ventiltypen wird häufig auch gewünscht, dass Ventilantriebe mit variablen Spannungen betrieben werden können. Beispielsweise existieren Anlagen, bei denen die Ventile mit einer Spannung von 100 V/60 Hz geöffnet werden sollen. Andere Anlagen nutzen zum Öffnen der Ventile 230 V/50 Hz. Es wird gewünscht, solche Anlagen mit einheitlichen Ventilen und Ventilantrieben bestücken zu können.

Gerade bei Gasventilen mit Sicherheitsanforderungen muss aber nicht nur sichergestellt sein, dass das Ventil nach Abschalten der Spannung überhaupt schließt, sondern darüber hinaus auch, dass das Schließen innerhalb einer vorgegebenen Zeitspanne beendet ist.

Daraus ergibt sich die Aufgabe, einen Ventilantrieb bereitzustellen, der einerseits in einem weiten Spannungsbereich von zum Beispiel 100 V bis 230 V einsetzbar ist und der andererseits das Einhalten gegebener Schließ-Maximalzeiten ermöglicht.

Diese Aufgabe wird mit dem Ventilantrieb nach Anspruch 1 gelöst.

Der erfindungsgemäße Ventilantrieb weist einen Elektromotor auf, der über ein Getriebe mit einem Ventilverschlussglied verbunden ist. Außerdem ist eine Schließfeder vorgesehen, die in Schließrichtung auf das Ventilverschlussglied einwirkt. Das Schließen des Ventils erfolgt somit passiv ohne Motorantrieb - der Elektromotor wird beim Schließen über das Getriebe von der Schließfeder angetrieben. Zum aktiven Betrieb des Elektromotors ist eine Spannungsversorgungseinrichtung vorgesehen, die eine Eingangs-Gleichrichterschaltung mit Wechselspannungseingang und Gleichspannungsausgang aufweist und an dessen Gleichspannungsausgang eine Spannungs-Puffereinrichtung, beispielsweise in Gestalt eines Kondensators, zum Beispiel eines Elektrolytkondensators, angeschlossen ist. An die Spannungs-Puffereinrichtung ist eine Motor-Ansteuerschaltung zum Betrieb des Elektromotors vorgesehen. Die Motor-Ansteuerschaltung erzeugt aus der von der Gleichspannungs-Puffereinrichtung bereitgestellten Gleichspannung Ansteuerimpulse für den Elektromotor, um diesen in Öffnungsrichtung zu drehen oder in einer gegebenen Position zu halten. Der Elektromotor ist vorzugsweise ein mehrphasiger Schrittmotor. Sein Rastmoment ist jedenfalls so gering, dass die Schließfeder sowohl das Rastmoment als auch die in dem Getriebe vorhandene Reibung sicher überwinden kann.

Weiter enthält der Ventilantrieb eine Abschalteinrichtung, die dazu eingerichtet ist, den Energiefluss von der Spannungs-Puffereinrichtung zu dem Motor innerhalb eines festgelegten Zeitintervalls nach Wegfall der an der Eingangs-Gleichrichterschaltung anliegenden Spannung zu unterbrechen. Diese Maßnahme ermöglicht es, den Elektromotor auch dann stromlos zu schalten, wenn die Spannungs-Puffereinrichtung noch nicht oder noch nicht vollständig entladen ist. Damit wird die Möglichkeit geschaffen, die Spannungs-Puffereinrichtung mit einer Kapazität auszulegen, die genügt, um bei geringstmöglicher anliegender Eingangsspannung wenigstens eine Netzhalbwelle, vorzugsweise eine vollständige Netzperiode (z.B. 20 ms) zu überbrücken. Andererseits enthält die Spannungs-Puffereinrichtung dann bei maximal anliegender Spannung (z.B. 265 V) so viel Energie, dass der Elektromotor über die Motor-Ansteuerschaltung nach Abschalten der Eingangsspannung länger als die gewünschte maximale Schließzeit in Offenstellung verharren würde. Durch die Abschalteinrichtung wird ein solches verzögertes Schließen des Ventils infolge hoher Eingangsspannung vermieden. Der erfindungsgemäße Ventilantrieb ist somit hinsichtlich der verarbeitbaren Eingangsspannungen besonders robust - unabhängig von der Höhe der Eingangsspannung wird die Schließreaktionszeit des Ventils innerhalb eines gegebenen Zeitintervalls (z.B. 80 ms) sichergestellt. Das bedeutet, dass das Ventil innerhalb der Schließrektionszeit den Schließvorgang beginnt, sich das Ventilverschlussglied also in Richtung des Ventilsitzes zu bewegen beginnt.

Die Eingangs-Gleichrichterschaltung kann eine Brückengleichrichterschaltung, zum Beispiel eine Graetz-Brücke sein, an deren Ausgang als Spannungs-Puffereinrichtung ein Kondensator angeschlossen ist. Die an diesen Kondensator angeschlossene Motor-Ansteuerschaltung weist einen entsprechenden Gleichspannungseingang und einen Motorwicklungsausgang aus, an den zum Beispiel zwei oder mehrere Motorwicklungen anschließbar sind. Die Spannungs-Puffereinrichtung glättet die von der Graetz-Brücke abgegebene Gleichspannung, wobei die Kapazität der Puffereinrichtung größer bemessen ist als ein Mindestwert, der sich aus dem Erfordernis ergibt, wenigstens eine Netzperiode oder zumindest eine Netzhalbwelle bei niedrigster Spannung zu überbrücken. Die reale Kapazität der Spannungs-Puffereinrichtung kann ein Mehrfaches dieses Mindestwerts sein.

Die Motor-Ansteuerschaltung enthält vorzugsweise eingangsseitig einen Gleichspannungsumsetzer, zum Beispiel in Gestalt eines Sperrwandlers oder einer anderen Wandlerschaltung, die einen Gleichspannungszwischenkreis speist. An diesen ist ein Wechselrichter angeschlossen, der die Motorwicklungen speist und vorzugsweise auch den Strom in diesen reguliert. Der Gleichspannungszwischenkreis ist vorzugsweise spannungsgeregelt, so dass seine Spannung im Wesentlichen konstant ist, solange die Eingangsspannung in dem zulässigen Bereich von z.B. 100 - 230 V, vorzugsweise zzgl. Toleranz, liegt. Die Spannungsreglung kann durch den Gleichspannungsumsetzer erbracht werden. Dazu kann dieser einen Steuerschaltkreis aufweisen, mit einem Spannungsfühlereingang, der mit dem Gleichspannungszwischenkreis verbunden ist. Außerdem kann der Steuerschaltkreis einen Stromfühlereingang aufweisen, um den Strom im Spannungswandler zu überwachen und bei Überschreitung einer Schwelle abzuschalten.

Die Motor-Ansteuerschaltung kann außerdem eine Motordämpfungsschaltung für den Generatorbetrieb des Motors enthalten. Damit kann sichergestellt werden, dass die Drehzahl des von der Schließfeder angetriebenen, im Generatorbetrieb laufenden Motors begrenzt wird, um die von dem Motor gespeicherte kinetische Energie zu begrenzen und das Ventil nicht zu schnell zu schließen. Die Dämpfungsschaltung kann eine Resonanzschaltung sein, deren Resonanzfrequenz oberhalb der Frequenz liegt, die an den Wicklungen des Motors auftritt wenn dieser mit der gewünschten Schließdrehzahl läuft.

Die Abschalteinrichtung unterbricht den Energiefluss von der Spannungs-Puffereinrichtung zu dem Motor und umfasst vorzugsweise mindestens einen Schalter, beispielweise einen Öffner. Dieser Schalter ist normalerweise geschlossen und öffnet erst kurz nach Wegfall der Speisespannung des Ventilantriebs. Er muss aber zur Netzausfallüberbrückung mindestens eine bestimmte Zeitspanne, z.B. 20 ms, vorzugsweise länger, z.B. 40 ms geschlossen bleiben. Der Öffner kann in der Verbindung zwischen der Spannungs-Puffereinrichtung und der Motor-Ansteuerschaltung liegen. Alternativ kann der Öffner im Gleichspannungszwischenkreis der Motor-Ansteuerschaltung untergebracht sein. Er liegt dabei wiederum vorzugsweise hinter einem Spannungspuffer (Kondensator), d.h. auf der Motorseite desselben, der in dem Spannungszwischenkreis angeordnet sein kann. Alternativ kann der Schalter an anderen Stellen der Motor-Ansteuerschaltung, zum Beispiel an dem Gleichspannungsumsetzer vorgesehen sein, um dessen Betreib zu unterbinden, sobald der Schalter ein entsprechendes Abschaltsignal erhält. Zum Beispiel kann der Schalter Ansteuersignale eines Sperrwandler-schaltelements kurzschließen oder die Generierung derselben unterdrücken. Dazu kann Einfluss auf ein Regelsignal des Sperrwandleransteuerschaltkreises, z.B. an dem Spannungsfühlereingang oder dem Stromfühlereingang, genommen werden, z.B. indem die Abschalteinrichtung an dem entsprechenden Strom- oder Spannungsfühlereingang einen Überstrom oder eine Überspannung vortäuscht.

Alternativ kann der Schalter der Abschalteinrichtung zum Abschalten der Betriebsspannung des Sperrwandleransteuerschaltkreises, zum Kurzschluss derselben oder zum Kurzschluss des Gleichspannungszwischenkreises vorgesehen sein.

Weitere Einzelheiten vorteilhafter Ausführungsformen der Erfindung ergeben sich aus der Zeichnung, der Beschreibung oder den Ansprüchen. Es zeigen:
Figur 1 den erfindungsgemäßen Ventilantrieb als vereinfachtes Schaltbild,
Figur 2 eine optional vorgesehene Motordämpfungsschaltung für den Generatorbetrieb desselben,
Figur 3 eine Abschalteinrichtung, in ausschnittsweiser vereinfachter erster Ausführungsform,
Figur 4, 5 und 6 alternative Ausführungsformen, die von Abschalteinrichtungen jeweils, in schematisierter ausschnittsweiser Darstellung,
Figur 7 eine detailliertere Darstellung der Schaltung des Ventilantriebs nach Figur 4.

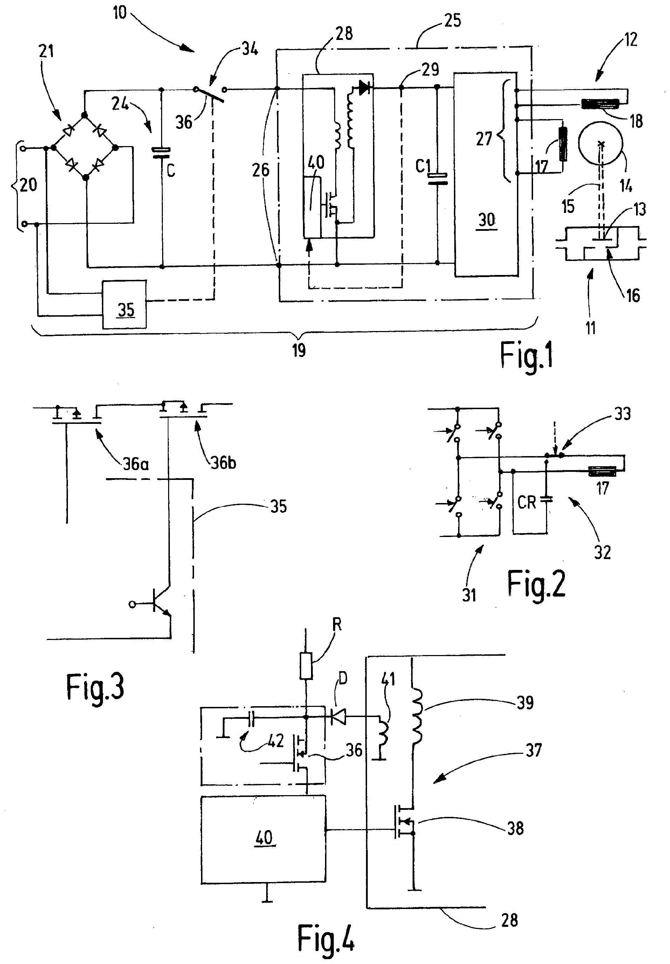

In Figur 1 ist ein Ventilantrieb 10 für ein Ventil 11 veranschaulicht, das mindestens ein von einem Elektromotor 12 angetriebenes Ventilverschlussglied 13 aufweist. Der Rotor 14 des Elektromotors 12 ist mit dem Ventilverschlussglied 13 über ein in Figur 1 lediglich anhand zweier gestrichelter Linien symbolisierten Getriebes 15 verbunden, zu dem auch eine nicht dargestellte Schließfeder gehört, die das Ventilverschlussglied 13 in Schließstellung, d.h. auf seinen Ventilsitz 15 hin vorspannt. Der Elektromotor 12 ist vorzugsweise ein Schrittmotor mit mindestens zwei oder auch mehreren Wicklungen 17, 18, die an eine Spannungsversorgungseinrichtung 19 angeschlossen sind. Der Elektromotor 12 und die Spannungsversorgungseinrichtung 19 bilden zusammen den Ventilantrieb 10, der in einem Gehäuse an dem Ventil 11 angebracht und über einen Eingang 20 ansteuerbar ist. Der Eingang 20 ist zweipolig ausgelegt. Ist er spannungslos, ist das Ventil 11 geschlossen. Bei Bestromung des Eingangs öffnet das Ventil 11. Der Eingang 20 ist dabei auf Eingangsspannungen von beispielsweise 100 V bis 240 V Nennspannung ausgelegt (d.h. er ist z.B. von 85 V bis 265 V betriebsfähig), so dass das Ventil 11 öffnet, wenn eine in diesem Bereich liegende Spannung an den Eingang 20 angelegt wird. Hingegen schließt das Ventil 11, nachdem diese Spannung wegfällt.

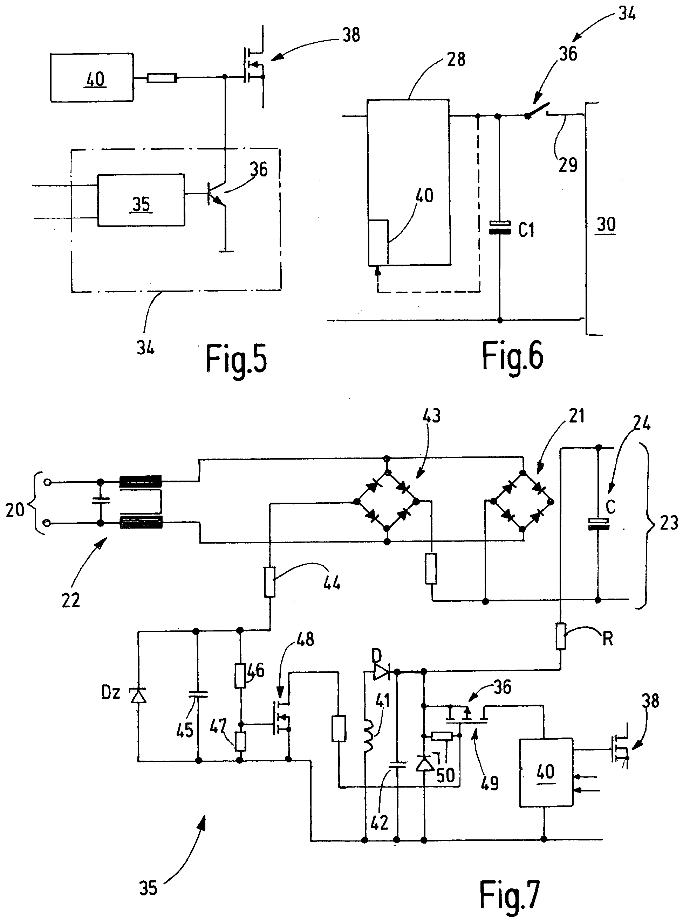

Zu der Spannungsversorgungseinrichtung 19 gehört, wenn die Ventileinheit für Wechselspannungsbetrieb vorgesehen ist, ggfs. eine Eingangs-Gleichrichterschaltung 21, deren Wechselspannungseingang gegebenenfalls über Entstör- und Filtermittel 22 (Figur 7) an den Eingang 20 angeschlossen ist. Die Eingangs-Gleichrichterschaltung kann ein Brückengleichrichter oder dergleichen sein. Die Eingangs-Gleichrichterschaltung kann bei Gleichspannungsbetrieb auch durch einen Verpolschutz in Gestalt mindestens einer Diode ersetzt sein, die längs in einer Eingangsleitung liegt. Der Verpolschutz hat einen Gleichspannungseingang und einen Gleichspannungsausgang. Ventileinheiten für Gleichspannungsbetrieb können z.B. für einen Spannungsbereich von 12 V bis 36 V ausgelegt sein.

Der Gleichspannungsausgang der Eingangs-Gleichrichterschaltung 21 (oder des Verpolschutzes) ist mit einem Gleichspannungskreis 23 (Figur 7) verbunden, der eine Spannungs-Puffereinrichtung 24 zum Beispiel in Gestalt eines einzelnen oder mehrerer Kondensatoren C enthält. Die Spannungs-Puffereinrichtung 24 dient zur Glättung der Spannung im Gleichspannungskreis 23, wobei sie vorzugsweise so dimensioniert ist, dass sie bei niedrigst möglicher anliegender Eingangsspannung (z.B. 85 V oder 100 V Wechselspannung) die Stromversorgung des Elektromotors 12 für mindestens eine Periode der Eingangsspannung aufrecht erhält. Typischerweise weist der Kondensator 24 dazu eine Kapazität zwischen 50 und 100 µF auf. Sie kann jedoch auch größer bemessen sein.

Die Spannungs-Puffereinrichtung 24 speist eine Motor-Ansteuerschaltung 25, die einen an die Spannungs-Puffereinrichtung 24 angeschlossenen Gleichspannungseingang 26 aufweist. Ausgangsseitig weist die Motor-Ansteuerschaltung einen Motorwicklungsausgang 27 mit Anschlüssen für die Motorwicklungen 17, 18 auf. Zu der Motor-Ansteuerschaltung 25 gehört ein Gleichspannungs-Umsetzer 28, der an den Gleichspannungseingang 26 angeschlossen ist und ausgangsseitig einen GleichspannungsZwischenkreis 29 speist. Dieser kann wiederum einen Pufferkondensator C1 enthalten. Der Gleichspannungs-Umsetzer 28 kann jeder geeignete Wandler, beispielsweise ein Sperrwandler sein.

Die Gleichspannung des Gleichspannungs-Zwischenkreises 29 wird über einen Wechselrichter 30 in die an dem Motorwicklungsausgang 27 bereitgestellten Ströme und Spannungen gewandelt. Der Wechselrichter 30 kann jeder geeignete Wechselrichter, beispielsweise ein Vollbrückenwechselrichter mit mehreren Wechselrichterbrücken, sein. Figur 2 veranschaulicht eine solche Wechselrichterbrücke 31 schematisch für die Motorwicklung 17. Die Wechselrichterbrücke 31 enthält mehrere, beispielsweise vier, elektronische Schalter, die so geöffnet und geschlossen werden, dass in der Motorwicklung 17 der gewünschte Stromverlauf erreicht wird. Außerdem kann eine Dämpfungsschaltung 32 vorgesehen sein, die einen Umschalter 33 und einen Resonanzkondensator CR enthält, um bei Generatorbetrieb des Motors 12 eine drehzahlabhängige Bremswirkung zu erzeugen. Dazu wird der Umschalter 33 so geschaltet, dass die Motorwicklung 17 und der Resonanzkondensator CR einen Resonanzkreis bilden.

Ähnliche Dämpfungsschaltungen können für mehrere oder alle Motorwicklungen vorgesehen sein.

Zu der Spannungsversorgungseinrichtung 19 gehört eine Abschalteinrichtung 34, die dazu dient, nach dem Abschalten der Eingangsspannung den Energiefluss von der Spannungs-Puffereinrichtung 24 zu dem Motor 12 zu unterbrechen. Der Energiefluss kann dabei vor der Motor-Ansteuerschaltung 25 oder auch innerhalb derselben unterbrochen werden. Die Abschalteinrichtung dient damit dazu, die Motorwicklungen 17, 18 ungeachtet einer womöglich in der Spannungs-Puffereinrichtung 24 gespeicherten Ladung zu entregen, wenn die Eingangsspannung an dem Eingang 20 abgeschaltet wird.

Zu der Abschalteinrichtung 34 gehört ein geeigneter Schalter 36, beispielsweise ein Relaiskontakt oder ein elektronischer Schalter wie beispielsweise ein MOSFET-Transistor, der von der an dem Eingang 20 anliegenden Spannung gesteuert wird. Dazu dient eine Zeitschaltung 35, die einerseits an den Eingang 20 angeschlossen ist und andererseits den Schalter 36 der Abschalteinrichtung 34 steuert.

Der insoweit beschriebene Ventilantrieb 10 arbeitet wie folgt:
Es wird zunächst davon ausgegangen, dass an dem Eingang 20 seit längerem keine Spannung anliegt. Das Ventilverschlussglied 13 ruht auf dem Ventilsitz 16 - das Ventil 11 ist geschlossen.

Wird nun eine in einem vorgegebenen Spannungsbereich von zum Beispiel 85 V bis 265 V (oder auch 12 V bis 36 V) liegende Versorgungsspannung an dem Eingang 20 angelegt, baut sich auf der Spannungs-Puffereinrichtung 24 sehr schnell eine Gleichspannung auf, die über den geschlossenen Schalter 36 an die Motor-Ansteuerschaltung 25 gelegt wird. Diese stellt dem Motor 12 Ansteuerimpulse bereit, so dass dieser anläuft und das Ventil 11 gegen die Kraft der Schließfeder öffnet und in Offenstellung hält.

Soll nun das Ventil 11 geschlossen werden, wird die an dem Eingang 20 anliegende Versorgungsspannung abgeschaltet (d.h. der Eingang 20 wir spannungslos). Die von der Spannungs-Puffereinrichtung 24 bereitgestellte Spannung versorgt jedoch zunächst weiterhin die Motor-Ansteuerschaltung 25, so dass der Motor 12 zunächst noch in Offenstellung gehalten wird. Nach Ablauf einer von der Zeitschaltung 35 vorgegebenen Haltezeit von zum Beispiel einigen 10 (z.B. 20 oder 30) ms öffnet die Zeitschaltung 35 den Schalter 36, so dass ungeachtet der auf dem Kondensator C vorhandenen Restladung die Motor-Ansteuerschaltung 25 stromlos wird. Somit werden auch die Wicklungen 17, 18 stromlos und der Rotor 14 des Motors 12 wird nun von der Kraft der Schließfeder rückwärts gedreht. Das Ventilverschlussglied läuft in Schließstellung.

Während des Schließens kann die Dämpfungsschaltung 32 nach Figur 2 aktiviert sein, um zu verhindern, dass der Rotor 14 zu hohe Drehzahlen annimmt. In diesem Fall ist der Kondensator CR mit der Wicklung 17 bzw. 18 zusammengeschaltet. Der drehende Rotor 14 erregt den Resonanzkreis, wobei der in diesem angefachte Strom auf die Drehung des Rotors 14 hemmend wirkt.

Durch die Nutzung der Abschalteinrichtung 34 kann der Kondensator C der Spannungs-Puffereinrichtung 24 groß dimensioniert werden, ohne dass durch den Speichereffekt das Schließen des Ventils 11 über ein zulässiges Maß hinaus verzögert würde. Außerdem wird erreicht, dass das Schließen des Ventils 11 ungeachtet der Größe der an den Eingang 20 angelegten Spannung einheitlich festgelegt ist. Insbesondere wird ein verzögertes Schließen vermieden, was sich sonst bei der Nutzung hoher Eingangsspannungen aufgrund der sich dann ergebenden langen Entladezeit der Spannungs-Puffereinrichtung 24 ergeben würde.

Der Schalter 36 der Abschalteinrichtung 34 kann als Öffner in der Verbindungsleitung zwischen der Spannungs-Puffereinrichtung 24 und der Motor-Ansteuerschaltung 25 angeordnet sein. Wie Figur 3 veranschaulicht, kann der Schalter 36 ein Transistor oder auch, wenn eine höhere Sicherheit gefordert wird, eine Reihenschaltung mehrerer Transistoren 36a, 36b sein.

Es ist jedoch auch möglich, den Energiefluss zwischen der Spannungs-Puffereinrichtung 24 und dem Motor 12 an anderer Stelle zu unterbrechen. Figur 4 veranschaulicht dazu eine Ausführungsform, bei der der Gleichspannungs-Umsetzer 28 zur Energieflussunterbrechung stillgesetzt wird. Der Gleichspannungs-Umsetzer 28 kann beispielsweise als Sperrwandler 37 mit einem Schaltglied 38 ausgebildet sein, das den Strom durch einen Wandlertransformator 39 abwechselnd freigibt und unterbricht. Das Schaltglied 38 wird von einem Steuerschaltkreis 40 gesteuert, der seinerseits einer Stromversorgung bedarf. Dazu ist an dem Wandlertransformator 39 eine Hilfswicklung 41 vorgesehen. Aus dieser wird über eine Diode D und als Starthilfe über einen Widerstand R Strom auf einen Kondensator 42 geleitet, der die Betriebsspannung für die Ansteuerschaltung 40 bereitstellt. Der Schalter 36 gibt die Versorgungsspannung für die Ansteuerschaltung 40 frei, wenn der Gleichspannungs-Umsetzer 28 arbeiten soll und er sperrt die Spannung, d.h. schaltet sie ab, wenn der Gleichspannungs-Umsetzer 28 keine Energie in den Gleichspannungszwischenkreis 29 geben soll.

Die Funktion dieser Schaltungsvariante entspricht der im Zusammenhang mit Figur 1 beschriebenen. Sobald die Betriebsspannung an dem Eingang 20 abgeschaltet wird, beginnt das Zeitglied 35 zu laufen, um nach Ablauf einer vorgegebenen Zeitspanne Δt den Schalter 36 zu öffnen und somit den Energiefluss von der Spannungs-Puffereinrichtung 24 zu dem Motor 12 zu unterbinden, indem der Gleichspannungs-Umsetzer 28 außer Betrieb gesetzt wird.

Eine abgewandelte Variante veranschaulicht Figur 5. In dieser ist der Schalter 36 dafür vorgesehen, die Ansteuerimpulse des Schaltglieds 38 zu unterdrücken, sobald der Energiefluss unterbrochen werden soll. Während der Schalter 36 bei dem vorbeschriebenen Ausführungsformen zum gewünschten Abschaltzeitpunkt jeweils geöffnet worden ist, wird er hier geschlossen. Er schließt damit die über die Ansteuersignalleitung auf das Gate des Schaltglieds 38 geleiteten Steuerimpulse kurz und unterbindet den Betrieb des Gleichspannungs-Umsetzers 28, zu dem das Schaltglied 38 gehört.

Eine weitere Variante wird in Figur 6 veranschaulicht. Dort ist der zu der Abschalteinrichtung 34 gehörige Schalter 36 in dem Gleichspannungs-Zwischenkreis 29 vorgesehen, wobei er vorzugsweise zwischen den Pufferkondensator C1 und dem Wechselrichter 30 angeordnet ist. Bei dieser Schaltungsvariante wird ab dem Abschaltzeitpunkt auch die auf dem Pufferkondensator C1 des Gleichspannungs-Zwischenkreises 29 gespeicherte Energie von dem Wechselrichter 30 ferngehalten, so dass dieser seinen Betrieb augenblicklich einstellt und den Motor 12 somit entregt.

Figur 7 veranschaulicht weitere Details insbesondere des Zeitglieds 35 anhand des Ausführungsbeispiels nach Figur 4, deren Beschreibung ergänzend heranzuziehen ist.

Das Zeitglied 35 greift die an dem Eingang 20 anliegende Versorgungsspannung ab. Dieses wird über einen Widerstand 44 an eine spannungsbegrenzende Z-Diode Dz und einen parallel zu dieser geschalteten Kondensator 45 gegeben. Aus Sicherheits- und Zuverlässigkeitsgründen können bei allen Ausführungsformen auch zwei oder mehrere Kondensatoren 45 zueinander parallel geschaltet werden.

Dem Kondensator 45 ist mindestens ein Entladewiderstand parallel geschaltet. Im vorliegenden Ausführungsbespiel wird der Entladewiderstand durch eine Reihenschaltung zweier Widerstände 46, 47 gebildet, die einen Spannungsteiler bilden. Durch den von der Reihenschaltung festgelegten Entladestrom und das Spannungsteilerverhältnis bestimmen sie den Abschaltzeitpunkt eines mit seinem Gate an den Spannungsteiler angeschlossenen Transistors 48, dessen Source mit Masse und dessen Drain mit dem Gate des als Schalter 36 verwendeten PMOS Transistors 49 verbunden ist. Dieser ist leitend, solange die Spannung an dem Gate des Transistors 48 eine Schaltschwelle übersteigt. Liegt die Spannung hingegen unter der Schaltschwelle, sperrt der PMOS Transistor 49, weil sein Gate über einen Widerstand 50 mit seinem Source-Anschluss verbunden ist. Alternativ kann anstelle des PMOS-Transistors ein BipolarTransistor vorgesehen werden.

Es wird darauf hingewiesen, dass bei allen beschriebenen Ausführungsformen anstelle eines einzigen Halbleiterschalters auch eine Reihenschaltung zweier oder mehrerer Halbleiterschalter und Dopplung ihrer jeweiligen Ansteuereinrichtungen insbesondere ihrer Zeitschaltungen 35 vorgesehen werden kann, um die Sicherheit zu erhöhen. Auch können bei allen beschriebenen Ausführungsformen anstelle von Halbleiterschaltern auch sonstige Schalter vorgesehen werden.

Ein Ventilantrieb 10, der insbesondere für Gasventile 11 mit Sicherheitsabsperrfunktion geeignet ist, weist einen Elektromotor 12, insbesondere einen Schrittmotor auf, der das Ventil über ein Getriebe 15 öffnet und gegebenenfalls auch schließt. Zum Betrieb des Elektromotors 12 gehört eine Spannungsversorgungseinrichtung 19, die Teil des Ventilantriebs 10 ist. Sie weist eine Eingangs-Gleichrichterschaltung 21 und eine an diese angeschlossene Puffereinrichtung 24, beispielswiese in Gestalt eines Kondensators C, auf. Aus der von dem Kondensator C gepufferten Spannung gewinnt eine Motor-Ansteuerschaltung 25 die Energie zum Betrieb des Elektromotors 12.

Um ein zu langes Offenhalten des Ventils 11 nach Abschalten der Versorgungsspannung am Eingang 20 zu verhindern, ist eine Abschalteinrichtung 34 vorgesehen, die nach Wegfall der Spannung an dem Eingang 20 den Energiefluss von der Spannungs-Puffereinrichtung 24 zu dem Elektromotor 12 unterbricht. Damit lässt sich der Ventilantrieb für eine sehr weiten Betriebsspannungsbereich von zum Beispiel 85 V bis zu 265 V auslegen, wobei ungeachtet der Höhe der verwendeten Spannung eine einheitlich kurze Abschaltzeit, d.h. Ventilschließzeit sichergestellt wird.

**Bezugszeichen:**

| | |
|---|---|
| 10 | Ventilantrieb |
| 11 | Ventil |
| 12 | Elektromotor / Schrittmotor |
| 13 | Ventilverschlussglied |
| 14 | Rotor |
| 15 | Getriebe |
| 16 | Ventilsitz |
| 17, 18 | Wicklungen |
| 19 | Spannungsversorgungseinrichtung |
| 20 | Eingang |
| 21 | Eingangs-Gleichrichterschaltung |
| 22 | Entstör- und Filtermittel |
| 23 | Gleichspannungskreis |
| 24 | Spannungs-Puffereinrichtung |
| C | Kondensator |
| 25 | Motor-Ansteuerschaltung |
| 26 | Gleichspannungseingang |
| 27 | Motorwicklungs-Ausgang |
| 28 | Gleichspannungsumsetzer |
| 29 | Gleichspannungs-Zwischenkreis |
| C1 | Pufferkondensator |
| 30 | Wechselrichter |
| 31 | Wechselrichterbrücke |
| 32 | Dämpfungsschaltung |
| 33 | Umschalter |
| CR | Resonanzkondensator |
| 34 | Abschalteinrichtung |
| 35 | Zeitschaltung, Zeitglied |
| 36, 36a, 36b | Schalter, Transistoren |
| 37 | Sperrwandler |
| 38 | Schaltglied |
| 39 | Wandlertransformator |
| 40 | Steuerschaltkreis |
| 41 | Hilfswicklung |
| D | Diode |
| R | Widerstand |
| | |
| Δt | vorgegebene Zeitspanne |
| 42 | Kondensator |
| 43 | Gleichrichter |
| 44 | Widerstand |
| Dz | Z-Diode |
| 45 | Kondensator |
| 46, 47 | Widerstände |
| 48 | Transistor |
| 49 | P-MOS-Transistor |
| 50 | Widerstand |

## Patentansprüche

1. Ventilantrieb (10) für Gasventile (11) mit Sicherheitsabsperrfunktion,
mit einem Elektromotor (12), der über ein Getriebe (15) mit einem Ventilverschlussglied (13) verbunden ist,
mit einer Schließfeder, die in Schließrichtung auf das Ventilverschlussglied (13) einwirkt,
mit einer Spannungsversorgungseinrichtung (19), die:
eine Eingangs-Gleichrichterschaltung (21), die einen Wechsel- oder Gleichspannungseingang und einen Gleichspannungsausgang aufweist,
eine an den Gleichspannungsausgang angeschlossene Spannungs-Puffereinrichtung (24),
eine Motor-Ansteuerschaltung (25) zum Betrieb des Elektromotors (12) und
eine Abschalteinrichtung (34) aufweist, die dazu eingerichtet ist, den Energiefluss von der Spannungs-Puffereinrichtung (24) zu dem Elektromotor (12) innerhalb eines festgelegten Zeitintervalls (Δt) nach Wegfall der am Eingang (20) anliegenden Spannung zu unterbrechen,
wobei das Schließen des Gasventils (11) passiv ohne Motorantrieb erfolgt, indem der Elektromotor (12) beim Schließen über das Getriebe (15) von der Schließfeder angetrieben wird.

2. Ventilantrieb nach Anspruch 1, **dadurch gekennzeichnet, dass** die Eingangs-Gleichrichterschaltung (21) eine Brückengleichrichterschaltung oder zumindest eine Verpolschutzdiode ist.

3. Ventilantrieb nach einem der vorstehenden Ansprüche, **dadurch gekennzeichnet, dass** die Spannungs-Puffereinrichtung (24) ein Kondensator (C) ist.

4. Ventilantrieb nach einem der vorstehenden Ansprüche, **dadurch gekennzeichnet, dass** die Spannungs-Puffereinrichtung (24) eine Pufferkapazität aufweist, die wenigstens zur Überbrückung einer Eingangsspannungsperiode bei minimaler Eingangsspannung ausreicht.

5. Ventilantrieb nach einem der vorstehenden Ansprüche, **dadurch gekennzeichnet, dass** die Motor-Ansteuerschaltung (25) einen Gleichspannungs-Eingang (26) und einen Motorwicklungs-Ausgang (27) aufweist.

6. Ventilantrieb nach einem der vorstehenden Ansprüche, **dadurch gekennzeichnet, dass** die Motor-Ansteuerschaltung (25) eingangsseitig einen Gleichspannungsumsetzer (28), der einen Gleichspannungs-Zwischenkreis (29) speist, und seitens des Motorwicklungs-Ausgangs (27) einen Wechselrichter (30) aufweist.

7. Ventilantrieb nach Anspruch 6, **dadurch gekennzeichnet, dass** der Gleichspannungsumsetzer (28) ein Schaltwandler, insbesondere ein Sperrwandler ist.

8. Ventilantrieb nach Anspruch 7, **dadurch gekennzeichnet, dass** der Sperrwandler einen Steuerschaltkreis (40) zur Ansteuerung eines Sperrwandler-Schaltelements (38) aufweist.

9. Ventilantrieb nach einem der vorstehenden Ansprüche, **dadurch gekennzeichnet, dass** die Motor-Ansteuerschaltung (25) seitens des Motorwicklungs-Ausgang (27) eine Motor-Dämpfungsschaltung (32) für den Generatorbetrieb des Motors (12) aufweist.

10. Ventilantrieb nach einem der vorstehenden Ansprüche, **dadurch gekennzeichnet, dass** die Abschalteinrichtung (34) ein Zeitglied (35) enthält, das dazu eingerichtet ist nach Ablauf des Zeitintervalls (Δt) ein Abschaltsignal zu erzeugen.

11. Ventilantrieb nach einem der vorstehenden Ansprüche, **dadurch gekennzeichnet, dass** die Abschalteinrichtung (34) einen Schalter (36) aufweist, der zwischen der Puffereinrichtung (24) und der Motor-Ansteuerschaltung (25) angeordnet ist.

12. Ventilantrieb nach Anspruch 6, **dadurch gekennzeichnet, dass** die Abschalteinrichtung (34) einen Schalter (36) aufweist, der zwischen dem Gleichspannungsumsetzer (28) und der Motor-Ansteuerschaltung (30) angeordnet ist.

13. Ventilantrieb nach Anspruch 8, **dadurch gekennzeichnet, dass** die Abschalteinrichtung (34) einen Schalter (36) aufweist, der mit dem Steuerschaltkreis (40) des Sperrwandler-Schaltelements (38) verbunden ist, um dessen Betrieb zu sperren.

14. Ventilantrieb nach Anspruch 6, **dadurch gekennzeichnet, dass** der Schalter (36) mit einer Ansteuersignalleitung zur Ansteuerung eines Sperrwandler-Schaltelements (38) verbunden ist.

15. Ventilantrieb nach Anspruch 8, **dadurch gekennzeichnet, dass** der Schalter (36) mit einer Betriebsspannungs-Versorgungsleitung des Schaltkreis (40) zur Ansteuerung des Sperrwandler-Schaltelements (38) verbunden ist.

## Claims

1. Valve train (10) for gas valves (11) with a safety shut-off function,
with an electric motor (12) which is connected via a gear mechanism (15) to a valve closing member (13),
with a closing spring which acts on the valve closing member (13) in the closing direction,
with a power supply device (19) which comprises:
- an input rectifier circuit (21) having an alternating or direct current voltage input and a direct current voltage output,
- a voltage buffer device (24) connected to the direct current voltage output,
- a motor actuation circuit (25) for operating the electric motor (12), and
- a shut-off device (34) which is configured to interrupt the energy flow from the voltage buffer device (24) to the electric motor (12) within an established time interval (Δt) after elimination of the voltage present at the input (20),
wherein the gas valve (11) is closed passively without motor drive in that for closure, the electric motor (12) is driven by the closing spring via the gear mechanism (15).

2. Valve train according to claim 1, **characterised in that** the input rectifier circuit (21) is a bridge rectifier circuit or at least a reverse polarity protection diode.

3. Valve train according to one of the preceding claims, **characterised in that** the voltage buffer device (24) is a capacitor (C).

4. Valve train according to any of the preceding claims, **characterised in that** the voltage buffer device (24) has a buffer capacity which is sufficient at least to bridge an input voltage period with minimal input voltage.

5. Valve train according to any of the preceding claims, **characterised in that** the motor actuation circuit (25) has a direct current voltage input (26) and a motor winding output (27).

6. Valve train according to any of the preceding claims, **characterised in that** the motor actuation circuit (25) on the input side has a direct voltage converter (28) which feeds a direct voltage intermediate circuit (29), and on the side of the motor winding output (27) has an inverter (30).

7. Valve train according to claim 6, **characterised in that** the direct current voltage converter (28) is a switched converter, in particular a blocking oscillator converter.

8. Valve train according to claim 7, **characterised in that** the blocking oscillator converter comprises a control circuit (40) for actuating a blocking converter switching element (38).

9. Valve train according to any of the preceding claims, **characterised in that** the motor actuation circuit (25) on the side of the motor winding output (27) has a motor damping circuit (32) for generator operation of the motor (12).

10. Valve train according to any of the preceding claims, **characterised in that** the shut-off device (34) contains a timing member (35) which is configured to generate a shut-off signal on expiry of the time interval (Δt).

11. Valve train according to any of the preceding claims, **characterised in that** the shut-off device (34) has a switch (36) which is arranged between the buffer device (24) and the motor actuation circuit (25).

12. Valve train according to claim 6, **characterised in that** the shut-off device (34) has a switch (36) arranged between the direct current voltage converter (28) and the motor actuation circuit (30).

13. Valve train according to claim 8, **characterised in that** the shut-off device (34) has a switch (36) which is connected to the control circuit (40) of the blocking converter switching element (38) in order to block its operation.

14. Valve train according to claim 6, **characterised in that** the switch (36) is connected to an actuation signal line for actuating a blocking converter switching element (38).

15. Valve train according to claim 8, **characterised in that** the switch (36) is connected to an operating voltage supply line of the circuit (40) for actuating the blocking converter switching element (38).

## Revendications

1. Commande de vanne (10) destinée à des vannes à gaz (11) dotées d'une fonction d'arrêt de sécurité,
comprenant un moteur électrique (12) qui est relié à un élément de fermeture de vanne (13), par l'intermédiaire d'un mécanisme de transmission (15),
comprenant un ressort de fermeture qui agit sur l'élément de fermeture de vanne (13), dans le sens de la fermeture,
comprenant un dispositif d'alimentation en tension (19) qui :
présente un circuit redresseur d'entrée (21) comportant une entrée de tension alternative ou continue et une sortie de tension continue,
présente un dispositif tampon de tension (24), connecté à la sortie de tension continue,
un circuit d'activation de moteur (25), destiné à faire fonctionner le moteur électrique (12), et
un dispositif de coupure (34) qui est conçu pour interrompre le flux d'énergie du dispositif tampon de tension (24) vers le moteur électrique (12), en l'espace d'un intervalle de temps (Δt) défini après la disparition de la tension appliquée à l'entrée (20),
la fermeture de la vanne à gaz (11) s'effectuant de manière passive, sans entraînement par moteur, par le fait que lors de la fermeture, le moteur électrique (12) est entraîné par le ressort de fermeture, par l'intermédiaire du mécanisme de transmission (15).

2. Commande de vanne selon la revendication 1, **caractérisée en ce que** le circuit redresseur d'entrée (21) est constitué d'un circuit redresseur en pont ou au moins d'une diode de protection contre l'inversion de polarité.

3. Commande de vanne selon l'une des revendications précédentes, **caractérisée en ce que** le dispositif tampon de tension (24) est un condensateur (C).

4. Commande de vanne selon l'une des revendications précédentes, **caractérisée en ce que** le dispositif tampon de tension (24) présente une capacité tampon qui suffit au moins pour couvrir une période de tension d'entrée avec une tension d'entrée minimale.

5. Commande de vanne selon l'une des revendications précédentes, **caractérisée en ce que** le circuit d'activation de moteur (25) présente une entrée de tension continue (26) et une sortie d'enroulement de moteur (27).

6. Commande de vanne selon l'une des revendications précédentes, **caractérisée en ce que** le circuit d'activation de moteur (25) présente, côté entrée, un convertisseur de tension continue (28); qui alimente un circuit intermédiaire à tension continue (29), et présente, côté sortie d'enroulement de moteur (27), un onduleur (30).

7. Commande de vanne selon la revendication 6, **caractérisée en ce que** le convertisseur de tension continue (28) est un convertisseur de commutation, en particulier un convertisseur flyback.

8. Commande de vanne selon la revendication 7, **caractérisée en ce que** le convertisseur flyback présente un circuit de commande (40) destiné à activer un élément de commutation (38) de convertisseur flyback.

9. Commande de vanne selon l'une des revendications précédentes, **caractérisée en ce que** le circuit d'activation de moteur (25) présente, côté sortie d'enroulement de moteur (27), un circuit d'amortissement de moteur (32) pour le fonctionnement en mode générateur du moteur (12).

10. Commande de vanne selon l'une des revendications précédentes, **caractérisée en ce que** le dispositif de coupure (34) contient un élément temporisateur (35) qui est conçu pour générer un signal de coupure après l'écoulement d'un intervalle de temps (Δt).

11. Commande de vanne selon l'une des revendications précédentes, **caractérisée en ce que** le dispositif de coupure (34) présente un interrupteur (36) qui est placé entre le dispositif tampon (24) et le circuit d'activation de moteur (25).

12. Commande de vanne selon la revendication 6, **caractérisée en ce que** le dispositif de coupure (34) présente un interrupteur (36) qui est placé entre le convertisseur de tension continue (28) et le circuit d'activation de moteur (30).

13. Commande de vanne selon la revendication 8, **caractérisée en ce que** le dispositif de coupure (34) présente un interrupteur (36) qui est relié au circuit de commande (40) de l'élément de commutation (38) de convertisseur flyback, aux fins de bloquer le fonctionnement de celui-ci.

14. Commande de vanne selon la revendication 6, **caractérisée en ce que** l'interrupteur (36) est relié à une ligne de signal d'activation destinée à activer un élément de commutation (38) de convertisseur flyback.

15. Commande de vanne selon la revendication 8, **caractérisée en ce que** l'interrupteur (36) est relié à une ligne d'alimentation en tension de service du circuit (40) destiné à l'activation de l'élément de commutation (38) de convertisseur flyback.
